# EUROPEAN PATENT SPECIFICATION

(11) **EP 4 017 836 B1**
(45) Date of publication and mention of the grant of the patent: **04.12.2024**
(21) Application number: 20750292.3
(22) Date of filing: 07.08.2020
(51) Int. Cl.: C03B 5/00, C03B 5/16, C03B 5/193, C03C 1/02, C03C 3/06, C03C 3/087

(54) **METHOD FOR REMOVING DISTURBING METALS LIKE IRON FROM GLASS**
VERFAHREN ZUM ENTFERNEN VON STÖRENDEN METALLEN WIE EISEN AUS GLAS
PROCÉDÉ D'ÉLIMINATION DE MÉTAUX PERTURBATEURS COMME LE FER DU VERRE

(30) Priority: 19.08.2019 EP 19192319
(43) Date of publication of application: 29.06.2022
(73) Proprietor: Piestert, Oliver, 38640 Goslar (DE)
(72) Inventor: Piestert, Oliver, 38640 Goslar (DE)
(74) Representative: Vossius & Partner Patentanwälte Rechtsanwälte mbB
(86) International application number: PCT/EP2020/072244
(87) International publication number: WO 2021/032506

(56) References cited:
- EP-A1- 2 813 297
- US-A- 3 345 190
- US-A1- 2015 110 980
- CHEN D ET AL: "Extraction of heavy metal ions from waste colored glass through phase separation", WASTE MANAGEMENT, ELSEVIER, NEW YORK, NY, US, vol. 26, no. 9, 1 January 2006 (2006-01-01), pages 1017 - 1023, XP024961261, ISSN: 0956-053X, [retrieved on 20060101], DOI: 10.1016/J.WASMAN.2005.09.019
- ZHERNOVAYA N F ET AL: "EFFECT OF THE REDOX POTENTIAL OF THE GLASS BATCH AND CULLET ON THE TINTING OF INDUSTRIALLY PRODUCED GLASS CONTAINING IRON OXIDES", GLASS AND CERAMICS, SPRINGER, NEW YORK, NY, US, vol. 57, no. 3/04, 1 March 2000 (2000-03-01), pages 84 - 86, XP000977202, ISSN: 0361-7610

## Description

The present invention relates to a method for producing glass by removing coloring ions through reduction.

### BACKGROUND OF THE INVENTION

Glass is made from sand (mostly SiO₂) and other additives such as soda (Na₂CO₃), lime (CaO/CaCO₃), magnesium oxide, magnesium carbonate, aluminum oxide, boron trioxide (B₂O₃), potassium carbonate, potassium oxide, lead oxide, germanium oxide (GeO₂), phosphate, sodium oxide (Na₂O), sodium hydroxide (NaOH), Titanium dioxide (TiO₂) and others. Metals like iron, chromium, manganese and others tend to lead to a coloration of the glass. Iron oxide and chromium (II) oxide generally lead to green glass, while sulfur together with iron may result in yellow to almost black glass. For some applications, e.g. bottles, the coloration is desired, while in other cases clear glass is desired, e.g. for sheet glass (windows, windshield, fire glass, gorilla glass), low-iron glass (for e.g. aquariums, display cases, windows, and other applications where clarity is desired), high-tech material (e.g. optical components like optical fibers, lenses) and chemicals such sodium meta silicate.

Commonly encountered coloring ions are iron, chromium, manganese, copper, uranium, nickel and cobalt. Often the raw materials already contain the coloring ions and therefore a lot of methods had been developed to reduce ion content e.g. by washing raw materials with a sequestrant to remove iron and other ions but only ions located on the surface of the raw materials are removed by this method. It will be understood that removal of these ions merely from the surface may not be sufficient. Another technique has been to use reducing conditions to convert Fe(III) to Fe(II), whereby coloration may be reduced to some extent, but not eliminated it as the iron is not actually removed from the glass melt.

General information regarding glass production can be found in Wolfgang Trier: Glasschmelzöfen - Konstruktion und Betriebsverhalten, Springer, Berlin 1984. It is known that there are generally two types of methods for making glass, which use either a continuous glass melting tank or a pot furnace. This process is described in https://www.schott.com/advanced_optics/english/capabilities/melting.html and can be summarized as follows:
Before melting, raw materials - or "batches" - are prepared. The first step in this process involves weighing the ingredients of the so-called batch recipe.

Historically, crucible ovens or pot furnaces have been used for this melting process. Here the individual steps in the glass melting process are performed in sequential order.

More recently, tank melting has been introduced, wherein the method steps are performed continuously, which may offer advantages when processing glass for mass production. Nevertheless, both melting processes are still used today for glass melting.

Processes for preparing glass typically contain the following steps:
(i) Fusing/melting: the batch containing the raw materials placed inside the furnace is heated, a molten mass forms, and due to a chemical reaction gaseous by-products (such as CO₂) often result in the formation of bubbles,
(ii) Purification: elimination of gas bubbles from the molten mixture,
(iii) Homogenization: stirring the bubble-free molten mixture,
(iv) Casting & hot forming: liquid glass exits the feeder and is formed into bars, rods, or blocks.

EP 2 813 297 A1 relates to a method for separating heavy metal from glass, comprising a reduction-phase-separation step for melting glass containing a heavy metal oxide and silica, together with a reducing agent and a phase-separation reagent, thereby reducing the heavy metal oxide and forming a glass phase comprising a silica phase and a secondary phase having a higher solubility with respect to an acid solution compared with the silica phase; a heavy metal collecting step for separating and collecting a heavy metal obtained by reducing the heavy metal oxide from the glass phase; and an acid extraction step for dissolving the secondary phase with a residual heavy metal in an acid solution by allowing the glass phase to come in contact with the acid solution.

US 3 345 190 concerns a specific method of preparing glass compositions containing metallic compounds wherein previously employed reducing agents in the molten glass compositions tend to rapidly and completely reduce the metallic ions of the said metallic compounds to the free metal state, and thereby cause a discoloration and deterioration of the glass composition, the improvement whereby the oxidation state of the metallic ions of the said metallic compounds is controlled and discoloration of the glass composition is avoided, which comprises having in the molten glass composition, as the sole additive for controlling the oxidation state of said metallic ions, a metal oxalate salt wherein the metal is a member selected from the group consisting of Group la metals and Group Ila metals of the Periodic Table, said salt being present in an amount sufficient to permit said metallic compound to produce the desired color in the base glass composition.

### Summary of the invention

The present invention relates to a method for producing glass by removing coloring ions through reduction, as defined in claim 1.

Commonly used sand may contain up to 15% by weight iron ions. To produce clear glass only raw materials containing low amount of iron (<0.1%) are typically used which are expensive and may not always be available. An objective of the present invention is thus the removal of such impurities, whereby not only the discoloration of the glass may be reduced but also a wider range of raw materials becomes usable for the production of transparent glass.

As opposed to previously known methods for removing discoloration, the process of the present invention does not require expensive removal of impurities from the raw materials but enables the removal of the undesired metal ions after the components of the glass have been combined and melted. As a result, the removal of the undesired metal ions is not only more thorough but also less expensive, as the agents used as reducing agents in the present invention are generally readily and inexpensively available.

In addition, the process according to the present invention can be implemented with a large range of presently used glass melting devices and can thus be performed without costly investments in adapted hardware.

In order to achieve these objectives, the present invention proposes treating a raw material glass composition with one or more reducing agents as defined in claim 1. The reducing agents may be added before, during or after melting the raw material glass composition or its components.

### Definitions

The terms "gas", "liquid", and "solid" as used herein generally refer to the aggregate state of the respective compounds at a temperature of 25°C and a pressure of 1 atm, with the exception of the "gaseous by-products" referred to herein, which refer to any compounds having a boiling point below the temperature of the melted glass composition, which is preferably 400°C to 1720°C. In order to facilitate the understanding of the term "gaseous by-products" referred to herein, it may more preferably be defined to refer to any compounds having a boiling point below 600°C, more preferably below 400°C. In the above, the boiling point is based on a pressure of 1 atm.

Unless explicitly stated to the contrary, the amounts specified herein as "%" refer to amounts in "wt.-%". The terms "weight", "wt." and "mass" are used interchangeably herein.

In the present invention certain compounds or components are referred to in their singular or plural forms. Unless explicitly stated otherwise, references in the singular should be understood as references to "one or more" of the respective compounds or components.

### Detailed description of the invention

The present invention relates to a method for producing glass by removing coloring ions through reduction, as set out in claim 1.

### Steps of the method

The method according to the invention includes step (i) preparing a molten raw material glass composition, preferably by heating a raw material glass composition or the components of a raw material glass composition.

It is to be understood that any known method for preparing the raw material glass composition may be used. The components of the raw material glass composition may be melted separately and the molten components then be combined to form the raw material glass composition. Alternatively, the components are combined at ambient temperature, such as 0°C to 50°C, to form the raw material glass composition and heated after these components have been combined. Suitable components of the raw material glass composition are described below.

The temperature and heating rate in step (i) are not particularly limited. However, in view of economical considerations, the heating rate is preferably as high as technically feasible, more preferably in the range of 1°C/min to 50°C/min, even more preferably in the range of 2°C/min to 45°C/min, still more preferably in the range of 5°C/min to 40°C/min, most preferably in the range of 10°C/min to 30°C/min. The temperature to which the raw material glass composition is heated typically depends on the chemical composition of the raw material glass composition. This temperature is preferably in the range of 400°C to 1720°C, more preferably in the range of 800°C to 1700°C, even more preferably in the range of 1100°C to 1650°C, still more preferably in the range of 1400°C to 1600°C.

The method according to the invention further includes step (ii) of adding one or more reducing agents to the raw material glass composition before, during or after melting in step i), wherein the reducing agent is one or more selected from aluminum, magnesium, sodium, silicon, hydrogen, carbon monoxide, potassium, lithium, calcium, strontium, barium, gallium, germanium, and boron, or any combination thereof.

The one or more reducing agents may be added in any manner to the raw material glass composition. In particular, they may be added before, during or after melting in step i). Preferably, they are added when the raw material glass composition is in a molten state.

However, the present invention is not limited thereto. The temperature of the raw material glass composition is not particularly limited, but the raw material glass composition is preferably in a molten state at this temperature, and is preferably in the range indicated as the heating temperature in step (i).

Solid reducing agents (i.e. solid at 25°C and 1 atm) may be added as solids or in a molten state (when heated above their melting point). Liquid reducing agents may be poured into the raw material glass composition. Gaseous reducing agents, such as gas mixtures comprising hydrogen and/or carbon monoxide, e.g. synthesis gas, are preferably added so as to be bubbled through the molten raw material glass composition. This approach has the added benefit that undesired gaseous impurities of the raw material glass composition, such as carbon dioxide, may be more easily and completely removed. As a result of partial pressure differences, the carbon dioxide diffuses into the bubbles of, e.g., the air, hydrogen or hydrogen/CO and is removed from the melt due to bubble growth and ascent. This process is also used to homogenize the molten glass to prevent streaking and resulting optical impairments. Furthermore, conventional vessels for forming molten glass compositions may already be provided with a suitable means for bubbling gases into the molten raw material glass compositions for the removal of gaseous impurities. In this case, the step of introducing the gaseous reducing agents into the molten raw material glass composition may not require any modifications to already available vessels nor require an additional step, as only the type of gas used for the bubbling would have to be changed from, e.g. air, to hydrogen and carbon monoxide or a gas mixture comprising hydrogen and/or carbon monooxide. In the method of the present invention, the reducing agent is one or more selected from aluminum, magnesium, sodium, silicon, hydrogen, carbon monoxide, potassium, lithium, calcium, strontium, barium, gallium, germanium, and boron, or any combination thereof.

The addition of the reducing agent(s) leads to the formation of gaseous and/or solid by-product(s). Preferably, a precipitate is formed in step (ii) which comprises one of more selected from iron, chromium, manganese, copper, nickel, cobalt and/or uranium metal, preferably at 20 wt.-% or more (preferably 35 wt.-% or more, more preferably 50 wt.-% or more, even more preferably 65 wt.-% or more, most preferably 80 wt.-% or more) based on the total mass of the precipitate.

The method according to the invention optionally includes step (iii) of removing precipitates formed after steps i) and ii) from the molten glass composition.

Depending on the choice of reducing agent(s) and metal ion(s) to be removed, the addition of the reducing agent in the method of the present invention typically leads to the formation of either a gaseous by-product or a solid by-product.

In the case of the gaseous by-product, the gaseous by-product may be removed from the molten glass composition without any particular means, or be accelerated by bubbling gas, which may or may not be the same as the gaseous reducing agent, into the molten glass composition. Gaseous by-products are typically formed when gaseous reducing agent(s), such as hydrogen or carbon monoxide or a mixture thereof is/are used. Products formed due to the addition of the one or more reducing agents, which may be gaseous at the temperature of the molten glass composition include, but are not limited to Mn₂(CO)₁₀, Fe(CO)₅, Co(CO)₄, Ni(CO)₄, and Ru(CO)₅. Accordingly, when gaseous reducing agent(s), such as hydrogen or carbon monoxide or a mixture thereof is/are used, it is preferred that the method includes allowing the gaseous by-product(s), such as Mn₂(CO)₁₀, Fe(CO)₅, Co(CO)₄, Ni(CO)₄, and Ru(CO)₅ and mixtures thereof, to escape from the molten glass composition.

On the other hand, the use of any reducing agents may lead to the formation of reduction products of the metal ions, which are not, or only to a limited degree, soluble in the molten glass composition. Such reduction products typically precipitate from the molten glass composition and can be collected at the bottom of the vessel in which the molten glass composition is held. Examples of such reduction products include, but are not limited to Fe, Cr, Mn, Cu, Ni, Co and/or U. In the present invention, the addition of the reducing agent(s) leads to the formation of gaseous and/or solid by-product(s). Accordingly, when reducing agent(s) such as one or more selected from aluminum, magnesium, sodium, silicon, hydrogen, carbon monoxide, potassium, lithium, calcium, strontium, barium, gallium, germanium, boron, or any combination thereof, preferably including hydrogen, are used, the method preferably includes removing precipitates formed after steps i) and ii) from the molten glass composition.

It is to be understood that any gaseous by-products and non-gaseous by-products, such as the reduction products of the metal ions, which are not, or only to a limited degree, soluble in the molten glass composition, are in particular removed in the process of the present invention while the glass composition is in a molten state. Thus, according to the gist of the present invention, it is not necessary to cool the molten glass composition in order to remove the by-products, such as by separation of the solidified glass phase and the solidified by-product phase. Rather, the process can be performed in a continuous manner without the need to solidify the glass composition to remove the by-products. As a result, the process of the present invention is not only more cost effective but also consumes less energy and is more environment-friendly.

It is furthermore to be understood that the use of reducing agents other than CO, and optionally other than hydrogen, preferably leads to the formation of non-gaseous by-products, more preferably solid by-products (herein also referred to as precipitates), even more preferably by-products in the form of particles. The solid by-products preferably have a density which is higher than the density of the molten glass composition so as to allow the precipitation of the solid by-products.

Removing metal by precipitation may lead to the formation of particles, preferably iron particles, on the bottom of the vessel. The precipitates can be removed during maintenance or by a second feeder. In the case of a pot furnace, only the top glass mold is typically used and the bottom glass mold including the precipitates is disposed.

The precipitate(s) to be removed in step (iii) typically comprise(s) one of more selected from iron, chromium, manganese, copper, nickel, cobalt and/or uranium metal, preferably at 20 wt.-% or more (preferably 35 wt.-% or more, more preferably 50 wt.-% or more, even more preferably 65 wt.-% or more, most preferably 80 wt.-% or more) based on the total mass of the precipitate. The precipitate(s) to be removed in step (iii) preferably do not relate to any potential precipitates of the glass which would form even if none of the reducing agents mentioned herein were used. Such precipitates may be present, e.g. because one or more of the components of the glass do not dissolve during the preparation of the glass, or because two or more compounds used in the glass preparation react with each other to form precipitates. Although such precipitates may inherently also be removed in step (iii) when removing the precipitates including the reduced metals, the gist of the invention is the reduction of the metal ions by the addition of the one or more reducing agents and the optional removal of precipitates including these metals formed by the reduction of the metals. Therefore, the precipitate(s) to be removed in step (iii) preferably refer to only the precipitates which form in the method according to the invention as compared to the same method differing only in that the one or more reducing agents are not added to the raw material glass composition. In other words, the precipitate(s) to be removed in step (iii) preferably refer to only the precipitates which form in the method according to the invention due to performing step (ii). This does, however, not exclude the possibility that other solid matter may (intentionally or unintentionally) be removed together (or simultaneous) with these precipitates.

Thus, in a preferred embodiment, step (iii) may also be referred to as a step of "removing one or more metals from the molten glass composition". It is to be understood that such metals are metals formed due to the use of the one or more reducing agents (in step (ii)). Furthermore, it is to be understood that this wording also does not exclude the simultaneous removal of other solid matter from the molten glass composition.

Accordingly, the gist of the present application is that, depending on the choice of reducing agent(s) and metal ion(s) to be removed, the addition of the reducing agent in the method of the present invention preferably leads to the formation of a gaseous by-product and/or a solid by-product.

Thus, in other words, the present invention relates to a method for producing a glass composition, comprising the steps of:
i) preparing a molten raw material glass composition, preferably by heating a raw material glass composition or the components of a raw material glass composition, and
ii) adding one or more reducing agents to the raw material glass composition before, during or after melting in step i), wherein the reducing agent is one or more selected from aluminum, magnesium, sodium, silicon, hydrogen, carbon monoxide, potassium, lithium, calcium, strontium, barium, gallium, germanium, and boron or any combination thereof,
   wherein the addition of the reducing agent(s) leads to the formation of gaseous and/or solid by-product(s), and
iii) optionally removing precipitates formed after steps i) and ii) from the molten glass composition,

wherein the content of one or more ions selected from iron ions, chromium ions, manganese ions, copper ions, nickel ions, cobalt ions and uranium ions in the glass composition is reduced by 50 wt-% or more, relative to their content in the raw material glass composition, and
the one or more reducing agents may be added before, during or after melting the raw material glass composition or its components.

The method may include any further steps that are commonly employed in the production of glass compositions. For example, the method may further include a step (iv) of producing one or more selected from sheet glass, window glass, container glass and optical glass from the molten glass composition.

In one aspect of the method of the present invention, post-consumer glass, such as recycling glass, may be used as the glass composition in step (i). This aspect offers a wide range of potential starting materials. Furthermore, even in the case where glass comprising different types of metal ions, which result in different colors, is used, the method of the present invention is still suitable to provide a clear glass as the final product. Consequently, the method of the present invention may provide a means for recycling mixtures of different types of glasses which have so far been very difficult to separate and/or recycle.

The present invention furthermore enables the recycling of glass-fiber containing materials, such as printed circuit boards. Circuit boards typically contain a large amount of glass fibers as well as certain amounts of metals such as Fe, Cr, Mn, Cu, Ni and Co, in a spatial arrangement and ratio which makes recycling thereof economically and technically very challenging. In the present invention, such circuit boards can be used as a source of glass and the metals to be separated can be collected separately and then be recycled for use in other industries. Any organic components (e.g. carbon containing components), such as any plastics, of the circuit boards are preferably removed by incineration of the circuit boards before use in the present invention. Alternatively, such circuit boards could be used in combination with an oxidation process to burn any plastic parts.

Consequently, in particular when using rather unconventional raw materials such as circuit boards, the metal ion(s) to be removed by the method of the present invention may also include noble metals such as rhodium, ruthenium, osmium, iridium, platinum, rhenium, palladium, mercury, silver and gold.

In addition to the above, it is contemplated that different reducing agents be used sequentially in order to achieve a sequential removal of certain metal ions. This sequential removal may be achieved by first introducing a weaker reducing agent, so as to reduce nobler metal ion, removing these nobler metals from the glass composition, and thereafter introducing a stronger reducing agent to reduce less noble metals. This aspect of the present invention may, e.g. be implemented by using circuit boards (e.g. original or incinerated) as the first reducing agent, and thereafter introducing a stronger reducing agent, preferably aluminum, to reduce less noble metals. In this manner, the Si and Al thereby added could be used to prepare aluminum-silicate glass.

### The raw material glass composition

As is known to the skilled person, a wide variety of different chemical compositions can be made into glass. Different formulae affect the mechanical, electrical, chemical, optical, and thermal properties of the glasses that are produced. There is no single chemical composition that characterizes all glass types, so that the definition of the chemical composition of the raw material glass composition used in the present invention (and the glass composition obtained by the method of the present invention) is not particularly limited.

Typical glass contains formers, fluxes, and stabilizers. Formers make up the largest percentage of the components to be melted. In typical soda-lime-silica glass the former is silica, which is often introduced in the form of sand. Fluxes lower the temperature at which the formers will melt. Commonly used fluxes are sodium carbonate and potassium carbonate. The density of potash glass is typically slightly higher than the density of soda glass. Stabilizers are preferably added to increase the strength and water resistance of the glass. Examples of stabilizers for glass compositions include calcium carbonate.

It is to be understood that several components of glass compositions are used as starting materials in the form of carbonates. When heating glass compositions prepared from such carbonates, the glass compositions are typically heated to a temperature which is sufficient to convert the carbonates into the respective oxides, while carbon dioxide gas is formed in the process and then generally removed from the molten glass composition. The glass compositions specified herein are referred to by the (calculated or measured) amount of the respective metal oxides contained therein.

Common soda-lime-silica glass, which is generally used for bottles and windows typically contains 70 to 75 wt-% silica, 10 to 15 wt-% sodium oxide, 4 to 12 wt-% calcium oxide, 0.05 to 2 wt-% aluminum oxide, 0.01 to 1 wt-% potassium oxide, 0.1 to 5 wt-% MgO and up to 0.5 wt-% iron oxide.

In contrast, glass which is typically used for laboratory or baking ware generally contains higher amounts of silica, additionally boron oxide and lower amounts of sodium oxide and calcium oxide.

While the chemical composition of the raw material glass composition used in step (i) is not particularly limited, from the view point of achieving improved properties such as transparency, thermal conductivity, thermal expansion, tensile strength, compression strength or refractive index, it preferably contains, in wt-% based on the total weight of the glass composition, 30 to 100% silica, up to 15% sodium oxide, up to 15% calcium oxide, up to 10% aluminum oxide, up to 15% potassium oxide, up to 5% MgO, up to 20% iron oxide, up to 70% lead oxide, up to 15% boron oxide, up to 15% rare earth metals, up to 15% germanium oxide and up to 5% phosphor pentoxide. Optionally, up to 15% in total of oxides of Li, Rb, Cs, Be, Sr, Ba, Sc, Ti, V, Cr, Mn, Fe, Co, Ni, Cu, Zn, Y, Zr, Nb, Mo, Ru, Rh, Pd, Ag, Cf, Hf, Ta, W, Re, Os, Ir, Pt, Au, Hg, Ga, As, In, Sn, Sb, Te, Tl, Bi, Ac, Th, Pa, U and/or Pu may be contained in the chemical composition of the raw material glass composition used in step (i).

While pure silica glasses typically have a melting point of about 1720 °C, the melting point of glasses including other components may be as low as 400 °C. Thus, the melting point of the raw material glass composition used in step (i) of the present invention is preferably in the range of 400 °C to about 1720°C.

It is to be understood that the raw material glass composition in step (i) may be obtained by mixing and melting the respective components of the raw material glass composition, either separately or jointly, or by merely melting a raw material glass composition which has previously been prepared or which is derived from glass that has already been in used, such as post-consumer glass.

### The reducing agent(s)

Many types of reducing agent(s) are known which include any materials that are suitable for reducing the metal ions to be removed from the raw material glass composition, such as aluminum, magnesium, sodium, silicon, hydrogen, carbon monoxide, potassium, lithium, calcium, strontium, barium, gallium, germanium, boron, or any combination thereof and electrolysis. In the present invention, the reducing agent is selected from aluminum, magnesium, sodium, silicon, hydrogen, carbon monoxide, potassium, lithium, calcium, strontium, barium, gallium, germanium, boron, or any combination thereof. It is to be understood that any of these may be used alone or in any combination with one or more other reducing agents. For example, an alloy of one or more of the above compounds may be used. Preferred reducing agents are carbon monoxide (CO), hydrogen (H₂), aluminum (Al), silicon (Si), magnesium (Mg), sodium (Na), or a combination of any of these. Furthermore, precursors of any of the above reducing agents may be used, provided that these are capable of forming one or more of the aforementioned reducing agents.

The reducing agent is preferably added after the raw material glass composition has been heated so as to form the molten raw material glass composition. The term "reducing agent" as used herein preferably does not include carbon. Furthermore, the term "reducing agent" as used herein preferably does include any CO and/or H₂ which may form in the molten glass composition due to the presence of a carbon source and water in the molten glass composition. Consequently, when CO and/or H₂ or any mixture containing these gases are indicated as examples of the "reducing agent", it is to be understood that these preferably refer only to CO and/or H₂ or any mixture containing these gases which has/have been introduced into the molten glass composition after heating the raw material glass composition to the temperatures disclosed herein. Conversely, any reducing agents other than CO and/or H₂ or any mixture containing these gases may be added before melting the raw material glass composition in step (i) and/or may be added in step (ii).

Without wishing to be bound by theory, it is presumed that the use of the above reducing agents typically results in a reduction of the metal ions to be removed, generally to the metals or the respective metal carbonyls. It is preferred that the reducing agents reduce at least one of the metal ions to be removed to the metallic state, i.e. the oxidation state of 0.

Electrolysis may also be used in combination with any one or more of the reducing agents disclosed herein. However, the use of electrolysis without the use of a reducing agent selected from aluminum, magnesium, sodium, silicon, hydrogen, carbon monoxide, potassium, lithium, calcium, strontium, barium, gallium, germanium, and boron is not according to the present invention. Electrolysis is typically conducted by applying a voltage of about 0.5 to 50 V between two electrodes located in the molten glass composition. The molten glass can be circulated between the electrodes. To support this circulation the distance between the electrodes should preferably be larger than the standard 1 cm in electrochemistry - e.g. anywhere in the range of 20 cm to 2 m, preferably 50 cm to 1.5 m, more preferably 80 to 100 cm, even more preferably 90 to 110 cm, still more preferably about 1.0 m. As a result of the larger distance of the electrodes, not having water as the solvent and working at high temperature, the voltage between the electrodes is high compared to standard electrode potential. When using electrolysis, the reduced metal ions are typically precipitated on the cathode(s). Furthermore, the voltage may be adjusted to reduce specific types of metal ions. A similar process is the Hall-H6roult process producing aluminum from a molt of Cryolite and aluminum oxide at 2072°C. In addition, a sequential removal of metal ions may be achieved by electrolysis, e.g. by varying the voltage.

The amount of reducing agents depends on the amount of metals having to be removed. After determination of the total molar concentration of metals to be removed (e.g. using Energy-dispersive X-ray spectroscopy (EDX), preferably as shown in the experimental examples), the required minimal amount of reducing agents can be calculated. In such cases an excess of reducing agent is often used, especially when it can be easily removed from the product, such as in the case of gaseous reducing agents. However, if it is not necessary to remove the disturbing metals quantitatively, it is also possible to use slightly less reducing agent than needed for total removal of the metals to be removed.

The solid reducing agents can be added as powders, granulates or bars. Bars are preferable with respect to avoiding oxidation of the reducing agent during addition. On the other hand, powders may be preferred if a higher reaction speed is desired. Such powders typically have volume average mean particle diameters as determined by laser diffraction in the range of 10 nm to 1 mm, preferably 50 nm to 0.5 mm, more preferably 100 nm to 0.2 mm, even more preferably 500 nm to 100 µm. Granulates offer a good balance of both effects. Such granulates typically have a particle diameter of more than 1 mm to 50 mm, as determined by picture analysis.

### The metal ion(s) to be removed by the method of the present invention

The metal ion(s) to be removed by the method of the present invention include, but are not limited to, one or more selected from iron ions, chromium ions, manganese ions, copper ions, nickel ions, cobalt ions and uranium ions. Yet, the present invention requires that the content of one or more ions selected from iron ions, chromium ions, manganese ions, copper ions, nickel ions, cobalt ions and uranium ions in the glass composition is reduced by the method of the present invention by 50 wt-% or more, relative to their content in the raw material glass composition. It is to be understood that these ions may be of any oxidation state which is commonly encountered in molten glass compositions. For example, iron ions may include Fe²⁺ and/or Fe³⁺. The reducing agent used in the method of the present invention is typically chosen so as to result in the reduction of one or more of the metal ion(s) to be removed to the respective oxidation state of 0. The oxidation state of 0 may be represented by the respective metal(s) and/or metal carbonyl(s).

As will be understood by a person skilled in the art, several of the metal ion(s) to be removed may form, after reduction to oxidation state 0, carbonyl compounds having a boiling point below the temperature at which the molten glass composition of the present invention is held. Accordingly, in particular when the reducing agent(s) include CO, carbonyl compounds may be formed which evaporate from the molten glass composition. The removal of these carbonyl compounds may be accelerated and increased by introducing one or more gases into the molten glass composition, typically by bubbling from the bottom or side walls of the vessel in which the molten glass composition is held. The one or more gases may, or may not, include the CO and optionally hydrogen.

When using reducing agent(s) other than CO, the metal ion(s) to be removed are preferably reduced to their metallic form. As an illustration, the following examples are given:

| | | |
|---|---|---|
| Fe²⁺ → Fe | Fe³⁺ → Fe | Cr³⁺ → Cr |
| Cr⁴⁺ → Cr | Mn⁷⁺ → Mn | Co³⁺ → Co |
| Cr⁶⁺ → Cr | Cu⁺ → Cu | U⁴⁺ → U |
| Mn²⁺ → Mn | Cu²⁺ → Cu | U⁵⁺ → U |
| Mn⁴⁺ → Mn | Ni²⁺ → Ni | U⁶⁺ → U |
| Mn⁵⁺ → Mn | Ni³⁺ → Ni | |
| Mn⁶⁺ → Mn | Co²⁺ → Co | |

Due to their low solubility, these metals typically precipitate in the molten glass composition. As a result, metal particles are preferably formed. These metal particles typically have a volume mean particles diameter, as determined by laser diffraction, between 1 µm and 100 µm. They are typically spherical in shape, optionally with a polycrystalline structure. Due to the higher density of the metals to be removed, such as iron (7.9 g/cm³), than the glass melt (e.g. 2.5 g/cm³) the particles sediment from the molten glass composition. The precipitate formed after introduction of the one or more reducing agents preferably comprises one of more selected from iron, chromium, manganese, copper, nickel, cobalt and/or uranium metal, preferably at 20 wt.-% or more (preferably 35 wt.-% or more, more preferably 50 wt.-% or more, even more preferably 65 wt.-% or more, most preferably 80 wt.-% or more) based on the total mass of the precipitate.

### The glass composition obtainable by the method of the present invention

As a result of using the method of the present invention the product glass composition is not only obtainable at lower cost than previously possible, but the product is also believed to be superior in transparency, thermal conductivity, thermal expansion, tensile strength, compression strength and/or refractive index to glass products obtained by methods of the state of the art.

The chemical composition of the glass composition obtainable by the method of the present invention may be the same as the chemical composition of the raw material glass composition, except that the concentration of one or more ions selected from iron ions, chromium ions, manganese ions, copper ions, nickel ions, cobalt ions and uranium ions is reduced. Specifically, by the method of the present invention, the content of one or more ions selected from iron ions, chromium ions, manganese ions, copper ions, nickel ions, cobalt ions and uranium ions in the glass composition is reduced by 50 wt-% or more, relative to their content in the raw material glass composition. Preferably, the concentration of at least one of iron ions, chromium ions, manganese ions, copper ions, nickel ions, cobalt ions and uranium ions is lower than 1.0 mass-%, preferably 0.5 mass-%, more preferably 0.2 mass-%, even more preferably 0.1 mass-%, still more preferably lower than 0.5 mass-%, most preferably lower than 0.2 mass-% in the glass composition obtainable by the method of the present invention. Further preferably, the total concentration of iron ions, chromium ions, manganese ions, copper ions, nickel ions, cobalt ions and uranium ions is lower than 1.0 mass-%, preferably 0.5 mass-%, more preferably 0.2 mass-%, even more preferably 0.1 mass-%, still more preferably lower than 0.5 mass-%, most preferably lower than 0.2 mass-%.

By keeping the concentration of the one or more ions selected from iron ions, chromium ions, manganese ions, copper ions, nickel ions, cobalt ions and uranium ions within these ranges, properties such as transparency, thermal conductivity, thermal expansion, tensile strength, compression strength or certain refractive index can be improved.

### The use according to the present invention

Disclosed herein for reference is the use of one or more reducing agents for reducing the concentration of one or more ions selected from iron ions, chromium ions, manganese ions, copper ions, nickel ions, cobalt ions and uranium ions in a molten glass composition.

Also disclosed herein for reference is the use of one or more reducing agents for increasing transparency and/or reducing colouring of a glass composition.

The reducing can be one or more selected from aluminum, magnesium, sodium, silicon, hydrogen, carbon monoxide, potassium, lithium, calcium, strontium, barium, gallium, germanium, boron, or any combination thereof, preferably one or more selected from aluminum, magnesium, sodium, silicon, hydrogen, carbon monoxide or any combination thereof, more preferably one or both selected from hydrogen and carbon monoxide.

More preferably, the reducing agent is silicon. Disclosed herein for reference as a reducing agent is electrolysis, wherein the voltage applied to the molten glass composition is preferably not more than 50 V, more preferably not more than 10 V.

It is to be understood that the (preferred) features of the method according to the present invention may also be applied to the uses described herein. In particular, the features describing types of reducing agents, temperatures at which the reduction is conducted as well as the types of glass compositions etc. may also apply to the uses described herein.

The present invention may be better understood with reference to the following examples. These examples are intended to be representative of specific embodiments of the invention, and are not intended as limiting the scope of the invention.

### Examples

### Methods:

A batch was prepared from reagent-grade chemicals all of which are assumed to convert to equivalent amounts of oxides after decomposition. The batch (100 g) was mixed in a ball mill (Retsch Planeten-Kugelmühle PM 100) for 1 h, placed in a crucible (Pt/Ir 90/10 - 200 ml) and heated to 1450°C inside an electric resistance furnace (Nabertherm LHTCT 01/16) for 2 - 3 h. The bulk glass was prepared by pouring the homogeneous melt into a preheated steel mold, immediately transferred into a muffle furnace (Nabertherm Muffelofen L 5/11) preheated to 650 °C and annealed at 650 °C for 2 h.

### Transparency of the glass

The transparency of the glass is defined as the light absorption at 380 nm. Light absorption at 380 nm was determined by UV/Vis/NIR spectroscopy. A 1 cm (d = 1cm) thick glass plate was put in the spectrometer and the absorption was measured (Lambda 950 UV/Vis/NIR spectrometer PerkinElmer).

### Composition of the glass

The composition of the glass was determined by EDX (Energy-dispersive X-ray spectroscopy). A sample was put into an EVO 50 XVP (Zeiss) with an EDX-Unit XFlash detector 4010 (Bruker axs). Unless stated otherwise, the content/amount of each substance is stated at wt.-% based on the total mass of each glass composition.

### Example 1 (for reference):

| | **Invention Example 1:** | **Comparative Example 1:** |
|---|---|---|
| reducing agent: | CO | non |
| process removing metal: | sedimentation in the glass melt | non |
| substance | Amount [%] | Amount [%] |
| SiO₂ | 72.7 | 72.6 |
| Al₂O₃ | 0.7 | 0.7 |
| FeO | 0.3 | 0.4 |
| CaO | 8.6 | 8.6 |
| MgO | 4.1 | 4.1 |
| Na₂O | 13.3 | 13.3 |
| K₂O | 0.3 | 0.3 |
| Absorption at 380nm (Transparency of the glass): | 0.10 | 0.13 |

### Example 2:

| | **Invention Example 2:** | **Comparative Example 2:** |
|---|---|---|
| reducing agent: | Mg | non |
| process removing metal: | sedimentation in the glass melt | non |
| substance | Amount [%] | Amount [%] |
| SiO₂ | 69.2 | 68.9 |
| Al₂O₃ | 1.3 | 1.4 |
| FeO | 1.0 | 6.1 |
| CaO | 10.1 | 10.1 |
| MgO | 6.3 | 1.6 |
| Na₂O | 11.7 | 11.6 |
| K₂O | 0.4 | 0.4 |
| Absorption at 380nm (Transparency of the glass): | 0.30 | 1.9 |

### Example 3:

| | **Invention Example 3:** | **Comparative Example 3:** |
|---|---|---|
| reducing agent: | H₂ | non |
| process removing metal: | sedimentation in the glass melt | non |
| substance | Amount [%] | Amount [%] |
| SiO₂ | 75.5 | 68.4 |
| Al₂O₃ | 0.1 | 0.1 |
| FeO | 0.3 | 9.7 |
| CaO | 5.2 | 4.8 |
| PbO | 2.7 | 2.5 |
| Na₂O | 4.5 | 4.1 |
| K₂O | 11.5 | 10.5 |
| Absorption at 380nm (Transparency of the glass): | 0.10 | 3.1 |

### Example 4:

| | **Invention Example 4:** | **Comparative Example 4:** |
|---|---|---|
| reducing agent: | Al | non |
| process removing metal: | sedimentation in the glass melt | non |
| substance | Amount [%] | Amount [%] |
| SiO₂ | 68.2 | 68.2 |
| Al₂O₃ | 7.2 | 5.2 |
| FeO | 0.0 | 2.0 |
| CaO | 9.7 | 9.7 |
| Na₂O | 13.0 | 13.0 |
| K₂O | 1.9 | 1.9 |
| Absorption at 380nm (Transparency of the glass): | 0.01 | 0.6 |

### Example 5:

| | **Invention Example 5:** | **Comparative Example 5:** |
|---|---|---|
| reducing agent: | Na | non |
| process removing metal: | sedimentation in the glass melt | non |
| substance | Amount [%] | Amount [%] |
| SiO₂ | 78.9 | 77.2 |
| Al₂O₃ | 2.2 | 2.2 |
| FeO | 0.1 | 4.2 |
| B₂O₃ | 12.4 | 12.1 |
| Na₂O | 7.9 | 3.7 |
| K₂O | 0.6 | 0.6 |
| Absorption at 380nm (Transparency of the glass): | 0.03 | 1.3 |

### Example 6:

| | **Invention Example 6:** | **Comparative Example 6:** |
|---|---|---|
| reducing agent: | Si | non |
| process removing metal: | sedimentation in the glass melt | non |
| substance | Amount [%] | Amount [%] |
| SiO₂ | 68.0 | 67.9 |
| Al₂O₃ | 1.9 | 1.9 |
| FeO | 0.1 | 0.2 |
| B₂O₃ | 9.0 | 9.0 |
| BaO | 4.2 | 4.2 |
| Na₂O | 2.1 | 2.1 |
| K₂O | 14.7 | 14.7 |
| Absorption at 380nm (Transparency of the glass): | 0.02 | 0.06 |

### Example 7:

| | **Invention Example 7:** | **Comparative Example 7:** |
|---|---|---|
| reducing agent: | CO | non |
| process removing metal: | evaporation as Fe(CO)₅ | non |
| substance | Amount [%] | Amount [%] |
| SiO₂ | 100 | 99.99 |
| FeO | 0 | 0.01 |
| Absorption at 380nm (Transparency of the glass): | 0.000 | 0.006 |

### Example 8:

| | **Invention Example 8:** | **Comparative Example 8:** |
|---|---|---|
| reducing agent: | CO | non |
| process removing metal: | sedimentation in the glass melt | non |
| substance | Amount [%] | Amount [%] |
| SiO₂ | 89.9 | 89.0 |
| FeO | 0.0 | 1.0 |
| Sm dotiert | 10.0 | 9.9 |
| Absorption at 380nm (Transparency of the glass): | 0.006 | 0.31 |

### Example 9:

| | **Invention Example 9:** | **Comparative Example 9:** |
|---|---|---|
| reducing agent: | CO + H₂ | non |
| process removing metal: | sedimentation in the glass melt | non |
| substance | Amount [%] | Amount [%] |
| SiO₂ | 87.9 | 86.1 |
| FeO | 0.0 | 2.1 |
| GeO₂ | 10.1 | 9.9 |
| P₂O₅ | 2.0 | 2.0 |
| Absorption at 380nm (Transparency of the glass): | 0.000 | 0.63 |

### Example 10 (for reference):

| | **Invention Example 10:** | **Comparative Example 10:** |
|---|---|---|
| reducing agent: | Electricity - 50V | non |
| process removing metal: | Adsorption on the electrodes (Steel) | non |
| substance | Amount [%] | Amount [%] |
| SiO₂ | 80.8 | 76.0 |
| FeO | 0.0 | 5.9 |
| GeO₂ | 15.2 | 14.3 |
| Al₂O₃ | 2.0 | 1.9 |
| TiO₂ | 2.0 | 1.9 |
| Absorption at 380nm (Transparency of the glass): | 0.000 | 1.9 |

### Example 11:

| | **Invention Example 10:** | **Comparative Example 10:** |
|---|---|---|
| reducing agent: | CO | non |
| process removing metal: | sedimentation in the glass melt | non |
| substance | Amount [%] | Amount [%] |
| SiO₂ | 68.2 | 65.8 |
| Na2O | 30.1 | 29.0 |
| FeO | 1.7 | 5.1 |
| Absorption at 380nm (Transparency of the glass): | 0.5 | 1.6 |

## Claims

1. A method for producing a glass composition, comprising the steps of:
i) preparing a molten raw material glass composition, preferably by heating a raw material glass composition or the components of a raw material glass composition, and
ii) adding one or more reducing agents to the raw material glass composition before, during or after melting in step i), wherein the reducing agent is one or more selected from aluminum, magnesium, sodium, silicon, hydrogen, carbon monoxide, potassium, lithium, calcium, strontium, barium, gallium, germanium, and boron, or any combination thereof,
wherein the addition of the reducing agent(s) leads to the formation of gaseous and/or solid by-product(s), and
iii) optionally removing precipitates formed after steps i) and ii) from the molten glass composition,
wherein the content of one or more ions selected from iron ions, chromium ions, manganese ions, copper ions, nickel ions, cobalt ions and uranium ions in the glass composition is reduced by 50 wt-% or more, relative to their content in the raw material glass composition, and
the one or more reducing agents may be added before, during or after melting the raw material glass composition or its components.

2. The method according to claim 1, wherein the reducing agent is one or both selected from hydrogen and carbon monoxide.

3. The method according to claim 1, wherein the reducing agent is silicon.

4. The method according to any one of claims 1 to 3, wherein the content of one or more ions selected from iron ions, chromium ions, manganese ions, copper ions, nickel ions, cobalt ions and uranium ions in the glass composition is reduced by 70% or more, preferably 90% or more, after step iii), relative to their content in the raw material glass composition.

5. The method according to any one of claims 1 to 4, wherein the content of iron ions in the glass composition is reduced by 50 wt-% or more, preferably 70%, even more preferably 90%, after step iii), relative to their content in the raw material glass composition.

6. The method according to any one of claims 1 to 5, wherein the "components of a raw material glass composition" used in step (i) are one or more types of glass, preferably comprising recycling glass.

7. The method according to any one of claims 1 to 6, further comprising a step (iv) of producing one or more selected from sheet glass, window glass, container glass and optical glass from the molten glass composition.

8. The method according to any one of claims 1 to 6, wherein one or more gases is/are introduced into the molten glass composition.

## Patentansprüche

1. Ein Verfahren zur Herstellung einer Glaszusammensetzung, umfassend die Schritte:
i) Herstellen einer geschmolzenen Rohstoff-Glaszusammensetzung, vorzugsweise durch Erhitzen einer Rohstoff-Glaszusammensetzung oder der Komponenten einer Rohstoff-Glaszusammensetzung, und
ii) Zugabe eines oder mehrerer Reduktionsmittel zu der Rohstoff-Glaszusammensetzung vor, während oder nach dem Schmelzen in Schritt i), wobei das Reduktionsmittel eines oder mehrere, ausgewählt aus Aluminium, Magnesium, Natrium, Silicium, Wasserstoff, Kohlenmonoxid, Kalium, Lithium, Calcium, Strontium, Barium, Gallium, Germanium und Bor oder einer beliebigen Kombination davon, ist,
wobei die Zugabe des/der Reduktionsmittel(s) zur Bildung gasförmiger und/oder fester Nebenprodukte führt, und
iii) gegebenenfalls Entfernen von nach den Schritten i) und ii) gebildeten Niederschlägen aus der geschmolzenen Glaszusammensetzung,
wobei der Gehalt eines oder mehrerer Ionen, ausgewählt aus Eisenionen, Chromionen, Manganionen, Kupferionen, Nickelionen, Kobaltionen und Uranionen, in der Glaszusammensetzung um 50 Gew.-% oder mehr, bezogen auf ihren Gehalt in der Rohstoff-Glaszusammensetzung, verringert ist und
das eine oder die mehreren Reduktionsmittel vor, während oder nach dem Schmelzen der Rohstoff-Glaszusammensetzung oder ihrer Komponenten zugegeben werden kann/können.

2. Das Verfahren nach Anspruch 1, wobei das Reduktionsmittel eines oder beide, ausgewählt aus Wasserstoff und Kohlenmonoxid, ist.

3. Das Verfahren nach Anspruch 1, wobei das Reduktionsmittel Silicium ist.

4. Das Verfahren nach einem der Ansprüche 1 bis 3, wobei der Gehalt eines oder mehrerer Ionen, ausgewählt aus Eisenionen, Chromionen, Manganionen, Kupferionen, Nickelionen, Kobaltionen und Uranionen, in der Glaszusammensetzung nach Schritt iii) um 70% oder mehr, vorzugsweise 90% oder mehr, bezogen auf ihren Gehalt in der Rohstoff-Glaszusammensetzung, verringert ist.

5. Das Verfahren nach einem der Ansprüche 1 bis 4, wobei der Gehalt an Eisenionen in der Glaszusammensetzung nach Schritt iii) um 50 Gew.-% oder mehr, vorzugsweise 70%, stärker bevorzugt 90%, bezogen auf ihren Gehalt in der Rohstoff-Glaszusammensetzung, verringert ist.

6. Das Verfahren nach einem der Ansprüche 1 bis 5, wobei die in Schritt (i) verwendeten "Komponenten einer Rohstoff-Glaszusammensetzung" eine oder mehrere Glasarten sind, die vorzugsweise Recyclingglas umfassen.

7. Das Verfahren nach einem der Ansprüche 1 bis 6, ferner umfassend einen Schritt (iv) des Herstellens eines oder mehrerer, ausgewählt aus Flachglas, Fensterglas, Behälterglas und optischem Glas, aus der geschmolzenen Glaszusammensetzung.

8. Das Verfahren nach einem der Ansprüche 1 bis 6, wobei ein oder mehrere Gase in die geschmolzene Glaszusammensetzung eingebracht wird/werden.

## Revendications

1. Procédé pour produire une composition de verre, comprenant les étapes de :
i) préparation d'une composition de verre matière première fondue, de préférence par chauffage d'une composition de verre matière première ou des composants d'une composition de verre matière première, et
ii) addition d'un ou plusieurs agents réducteurs à la composition de verre matière première avant, pendant ou après la fonte dans l'étape i), dans laquelle l'agent réducteur est un ou plusieurs choisis parmi l'aluminium, le magnésium, le sodium, le silicium, l'hydrogène, le monoxyde de carbone, le potassium, le lithium, le calcium, le strontium, le baryum, le gallium, le germanium et le bore, ou l'une quelconque de leurs combinaisons,
dans lequel l'addition du ou des agent(s) réducteur(s) conduit à la formation d'un ou plusieurs sous-produit(s) gazeux et/ou solide(s), et
iii) éventuellement retrait des précipités formés après les étapes i) et ii) hors de la composition de verre fondue,
dans lequel la teneur en un ou plusieurs ions choisis parmi les ions fer, les ions chrome, les ions manganèse, les ions cuivre, les ions nickel, les ions cobalt et les ions uranium dans la composition de verre est réduite de 50 % en poids ou plus par rapport à leur teneur dans la composition de verre matière première, et
les uns ou plusieurs agents réducteurs peuvent être ajoutés avant, pendant ou après la fonte de la composition de verre matière première ou de ses composants.

2. Procédé selon la revendication 1, dans lequel l'agent réducteur est l'un ou les deux choisis parmi l'hydrogène et le monoxyde de carbone.

3. Procédé selon la revendication 1, dans lequel l'agent réducteur est le silicium.

4. Procédé selon l'une quelconque des revendications 1 à 3, dans lequel la teneur en un ou plusieurs ions choisis parmi les ions fer, les ions chrome, les ions manganèse, les ions cuivre, les ions nickel, les ions cobalt et les ions uranium dans la composition de verre est réduite de 70 % ou plus, de préférence 90 % ou plus, après l'étape iii), par rapport à leur teneur dans la composition de verre matière première.

5. Procédé selon l'une quelconque des revendications 1 à 4, dans lequel la teneur en ions fer dans la composition de verre est réduite de 50 % en poids ou plus, de préférence 70 %, mieux encore 90 %, après l'étape iii), par rapport à leur teneur dans la composition de verre matière première.

6. Procédé selon l'une quelconque des revendications 1 à 5, dans lequel les "composants d'une composition de verre matière première" utilisés dans l'étape (i) sont un ou plusieurs types de verre, de préférence comprenant du verre de recyclage.

7. Procédé selon l'une quelconque des revendications 1 à 6, comprenant en outre une étape (iv) de production d'un ou plusieurs choisis parmi une feuille de verre, une vitre de fenêtre, un verre de récipient et un verre optique, à partir de la composition de verre fondu.

8. Procédé selon l'une quelconque des revendications 1 à 6, dans lequel un ou plusieurs gaz est/sont introduit(s) dans la composition de verre fondu.
